# EUROPEAN PATENT APPLICATION

(11) **EP 1 707 613 A1**
(43) Date of publication of application: **04.10.2006**
(21) Application number: 06251465.8
(22) Date of filing: 20.03.2006
(51) Int. Cl.: C09K 11/77, C09K 11/85, G01T 1/202

(54) **Scintillator compositions based on lanthanide halides and alkali metals, and related methods and articles**

(30) Priority: 30.03.2005 US 95233
(71) Applicant: GENERAL ELECTRIC COMPANY, Schenectady, NY 12345 (US)
(72) Inventor: Srivastava, Alok Mani, Nikskayuna New York 12309 (US); Comanzo, Holly Ann, Niskayuna New York 12309 (US); Deng, Quin, Shanghai 200233 (CN); Duclos, Steven Jude, Clifton Park, New York 12065 (US); Clarke, Lucas Lemar, Uniontown, Ohio 44685 (US)
(74) Representative: Bedford, Grant Richard

(57) **Abstract**

Scintillator compositions are described. They include a matrix material containing at least one lanthanide halide and at least one alkali metal. The compositions also include an activator for the matrix, which can be based on cerium, praseodymium, or a mixture of cerium and praseodymium. Radiation detectors which include the scintillators are disclosed. A method for detecting high-energy radiation with a radiation detector is also described.

## Description

In a general sense, this invention is directed to luminescent materials. More particularly, the invention is directed to scintillator compositions which are especially useful for detecting gamma-rays and X-rays under a variety of conditions.

Scintillators can be used to detect high-energy radiation, in processes which are both very simple and very accurate. The scintillator crystals are widely used in detectors for gamma-rays, X-rays, cosmic rays, and particles characterized by an energy level of greater than about 1 keV. The scintillator crystal is coupled with a light-detection means, i.e., a photodetector. When photons from a radionuclide source impact the crystal, the crystal emits light. The photodetector produces an electrical signal proportional to the number of light pulses received, and to their intensity.

The scintillators have been found to be useful for applications in chemistry, physics, geology, and medicine. Specific examples of the applications include positron emission tomography (PET) devices; well-logging for the oil and gas industry, and various digital imaging applications.

As those skilled in the art understand, the composition of the scintillator is critical to the performance of all of these devices. The scintillator must be responsive to X-ray and gamma ray excitation. Moreover, the scintillator should possess a number of characteristics which enhance radiation detection. For example, most scintillator materials must possess high light output, short decay time, reduced afterglow, high "stopping power", and acceptable energy resolution. (Other properties can also be very significant, depending on how the scintillator is used, as mentioned below).

A number of scintillator materials which possess most or all of these properties have been in use over the years. For example, thallium-activated sodium iodide (Nal(Tl)) has been widely employed as a scintillator for decades. Examples of other common scintillator materials include bismuth germanate (BGO), cerium-doped gadolinium orthosilicate (GSO), and cerium-doped lutetium orthosilicate (LSO).

Each of these materials has some good properties which are very suitable for certain applications. However, they each also have deficiencies. The common problems are low light yield, physical weakness, and the inability to produce large-size, high quality single crystals. Other drawbacks are also present. For example, the thallium-activated materials are very hygroscopic, and can also produce a large and persistent after-glow, which can interfere with scintillator function. Moreover, the BGO materials frequently have a slow decay time. On the other hand, the LSO materials are expensive, and may also contain radioactive lutetium isotopes which can also interfere with scintillator function.

Cerium-activated lanthanide-halide compounds have recently been described as promising scintillators. Some of these materials are described in two published patent applications attributed for P. Dorenbos et al: WO 01/60944 A2 and WO 01/60945 A2. The halide-containing materials are said to simultaneously provide a combination of good energy resolution and low decay constants. Such a combination of properties can be very advantageous for some applications. Moreover, the materials apparently exhibit acceptable light output values. Furthermore, they are free of lutetium, and the problems sometimes caused by that element, described above.

While the Dorenbos publications certainly seem to represent an advance in scintillator technology, the requirements for these crystal materials continue to escalate. One end use which has rapidly become more demanding is well-logging, mentioned above. In brief, scintillator crystals (usually Nal(TI)-based) are typically enclosed in tubes or casings, forming a crystal package. The package includes an associated photomultiplier tube, and is incorporated into a drilling tool which moves through a well bore.

The scintillation element functions by capturing radiation from the surrounding geological formation, and converting that energy into light. The generated light is transmitted to the photo-multiplier tube. The light impulses are transformed into electrical impulses. Data based on the impulses may be transmitted "up-hole" to analyzing equipment, or stored locally. It is now common practice to obtain and transmit such data while drilling, i.e., "measurements while drilling" (MWD).

Clearly, scintillator crystals used for well-logging applications must be able to function at very high temperatures, as well as under harsh shock and vibration conditions. The scintillator material should therefore have a maximized combination of many of the properties discussed previously, e.g., high light output and energy resolution, as well as fast decay times. (The scintillator must also be small enough to be enclosed in a package suitable for a very constrained space). The threshold of acceptable properties has been raised considerably as drilling is undertaken at much greater depths. For example, the ability of conventional scintillator crystals to produce strong light output with high resolution can be seriously imperiled as drilling depth is increased.

It should be apparent that new scintillator materials would be of considerable interest, if they could satisfy the ever-increasing demands for commercial and industrial use. The materials should exhibit excellent light output. They should also possess one or more other desirable characteristics, such as relatively fast decay times and good energy resolution characteristics, especially in the case of gamma rays. Furthermore, they should be capable of being produced efficiently, at reasonable cost and acceptable crystal size.

Various embodiments of this invention relate to a scintillator composition which comprises the following, and any reaction products thereof:
(a) a matrix material, comprising:
   (i) at least one lanthanide halide; and
   (ii) at least one alkali metal;
   and
(b) an activator for the matrix material, comprising cerium, praseodymium, or a mixture of cerium and praseodymium.

Various additional embodiments are directed to a radiation detector for detecting high-energy radiation. The radiation detector comprises a crystal scintillator. The scintillator material comprises the matrix material mentioned above, and any reaction products thereof. The scintillator further comprises an activator for the matrix material, comprising cerium, praseodymium, or a mixture of cerium and praseodymium.

The radiation detector may also include a photodetector. The photodetector is optically coupled to the scintillator, so as to be capable of producing an electrical signal in response to the emission of a light pulse produced by the scintillator.

Various embodiments relate to a method for detecting high-energy radiation with a scintillation detector. The method comprises the following steps:
(A) receiving radiation by a scintillator crystal, so as to produce photons which are characteristic of the radiation; and
(B) detecting the photons with a photon detector coupled to the scintillator crystal.

The scintillator crystal is formed of the composition mentioned above, and further described below, along with other details regarding the various features of embodiments of this invention.

The matrix material for the scintillator composition comprises at least one lanthanide halide compound. The halide is either bromine, chlorine, or iodine. Each of the individual halides may be useful for certain applications. In some embodiments, iodine is especially preferred, because of its high light output characteristics. Moreover, in other embodiments, at least two of the halides are present. Thus, the matrix material can be in the form of a solid solution of at least two lanthanide halides. As used herein, the term "solid solution" refers to a mixture of the halides in solid, crystalline form, which may include a single phase, or multiple phases. (Those skilled in the art understand that phase transitions may occur within a crystal after its formation, e.g., after subsequent processing steps like sintering or densification).

The lanthanide can be any of the rare earth elements, i.e., lanthanum, cerium, praseodymium, neodymium, promethium, samarium, europium, gadolinium, terbium, dysprosium, holmium, erbium, thulium, ytterbium, and lutetium. Mixtures of two or more of the lanthanides are also possible. (Those skilled in the art understand that yttrium is closely associated with the rare earth group. Thus, for the purpose of this disclosure, yttrium is also considered to be a part of the lanthanide family). Preferred lanthanides are selected from the group consisting of lanthanum, yttrium, gadolinium, lutetium, scandium, praseodymium, and mixtures thereof. In especially preferred embodiments, the lanthanide is lanthanum itself.

Some specific, non-limiting examples of the lanthanide halides are as follows: lutetium chloride, lutetium bromide, yttrium chloride, yttrium bromide, gadolinium chloride, gadolinium bromide, praseodymium chloride, praseodymium bromide, and mixtures thereof. However, in preferred embodiments, lanthanum halides are employed, i.e., lanthanum iodide (Lal₃), lanthanum bromide (LaBr₃), lanthanum chloride (LaCl₃), or some combination thereof. These materials are known in the art and commercially available, or can be prepared by conventional techniques.

When present, it is usually important that lanthanum iodide be substantially free of oxygen, or oxygen-containing compounds. (Oxygen can have a detrimental effect on the luminescence of the scintillators). As used herein, "substantially free" is meant to indicate a compound containing less than about 0.1 mole % oxygen, and preferably, less than about 0.01 mole % oxygen. Methods for ensuring that the lanthanum iodide is free of oxygen are known in the art. Exemplary techniques are described by A. Srivastava et al, in pending patent application S.N. 10/689,361. That application was filed on October 17, 2003, and is incorporated herein by reference.

The matrix material further comprises at least one alkali metal. Examples include potassium, rubidium, sodium, and cesium. Mixtures of alkali metals could also be used. In some preferred embodiments, rubidium and cesium are the preferred alkali metals, with rubidium being especially preferred.

The relative proportions of alkali metal and lanthanide halide can vary considerably. In general, the molar ratio of alkali metal (total) to lanthanide halide (total) will range from about 2.2 : 1.0 to about 1.8 : 1.0. Usually, however, the proportions will depend on stoichiometric considerations, such as valence, atomic weight, chemical bonding, coordination number, and the like. As an example, many scintillator compounds for some embodiments of the present invention have the general formula

A₂LnX₅,

wherein A is at least one alkali metal; Ln is at least one lanthanide element; and X is at least one halogen. For these types of compounds, each alkali metal usually has a valence of +1; each lanthanide usually has a valence of +3; and each halogen has a valence of -1, to achieve the stoichiometric balance.

Some specific, non-limiting examples of scintillators (i.e., the matrix) for some embodiments of the present invention are as follows: K₂LaCl₅, Rb₂LaCl₅, Cs₂LaCl₅, K₂LaBr₅, Rb₂LaBr₅, K₂Lal₅, Rb₂Lal₅, K₂GdCl₅, K₂GdBr₅, and Cs₂LuCl₅. Each of these materials is thought to form in a crystal structure conducive to good scintillator function in some embodiments of the present invention (e.g., for some of the end-uses described herein).

Other scintillator compounds do not appear to form the crystal structure most conducive to good scintillator function. However, they may achieve that structure - at least in part - in admixture with each other, or in admixture with any of the specific compounds mentioned above. Non-limiting examples of these compounds are as follows: Cs₂LaBr₅, Cs₂Lal₅, Rb₂GdCl₅, Cs₂GdCl₅, Rb₂GdBr₅, Cs₂GdBr₅, K₂Gdl₅, Rb₂Gdl₅ Cs₂Gdl₅, K₂YCl₅, Rb₂YCl₅, Cs₂YCl₅, K₂YBr₅, Rb₂YBr₅, Cs₂YBr₅, K₂Yl₅, Rb₂Yl₅, Cs₂Yl₅, K₂LuCl₅, Rb₂LuCl₅, K₂LuBr₅, Rb₂LuBr₅, Cs₂LuBr₅, K₂Lul₅, Rb₂Lul₅, and Cs₂Lul₅.

The scintillator composition further includes an activator for the matrix material. (The activator is sometimes referred to as a "dopant"). The preferred activator is selected from the group consisting of cerium, praseodymium, and mixtures of cerium and praseodymium. In terms of luminescence efficiency and decay time, cerium is often the most preferred activator. It is usually employed in its trivalent form, Ce⁺³. The activator can be supplied in various forms, e.g., halides like cerium chloride or cerium bromide.

The amount of activator present will depend on various factors, such as the particular alkali metal and halide-lanthanide present in the matrix; the desired emission properties and decay time; and the type of detection device into which the scintillator is being incorporated. Usually, the activator is employed at a level in the range of about 0.1 mole % to about 20 mole %, based on total moles of activator and alkali metal-lanthanide-halide matrix material. In many preferred embodiments, the amount of activator is in the range of about 1 mole % to about 10 mole %.

The scintillator composition may be prepared and used in various forms. In some preferred embodiments, the composition is in monocrystalline (i.e., "single crystal") form. Monocrystalline scintillation crystals have a greater tendency for transparency. They are especially useful for high-energy radiation detectors, e.g., those used for gamma rays.

The scintillator composition can be used in other forms as well, depending on its intended end use. For example, it can be in powder form. It should also be understood that the scintillator compositions may contain small amounts of impurities, as described in the previously-referenced publications, WO 01/60944 A2 and WO 01/60945 A2 (incorporated herein by reference). These impurities usually originate with the starting materials, and typically constitute less than about 0.1 % by weight of the scintillator composition. Very often, they constitute less than about 0.01 % by weight of the composition. The composition may also include parasitic additives, whose volume percentage is usually less than about 1%. Moreover, minor amounts of other materials may be purposefully included in the scintillator compositions.

The scintillator materials can be prepared by a variety of conventional techniques. (It should be understood that the scintillator compositions may also contain a variety of reaction products of these techniques). Usually, a suitable powder containing the desired materials in the correct proportions is first prepared, followed by such operations as calcination, die forming, sintering, and/or hot isostatic pressing. The powder can be prepared by mixing various forms of the reactants (e.g., salts, oxides, halides, oxalates, carbonates, nitrates, or mixtures thereof). In some preferred embodiments, the lanthanide and the halide are supplied as a single reactant, e.g., a lanthanide halide like lanthanum chloride, which is commercially available. As a non-limiting illustration, one or more lanthanide halides can be combined with one or more alkali metal halides (in the desired proportions), and at least one activator-containing reactant.

The mixing of the reactants can be carried out by any suitable means which ensures thorough, uniform blending. For example, mixing can be carried out in an agate mortar and pestle. Alternatively, a blender or pulverization apparatus can be used, such as a ball mill, a bowl mill, a hammer mill, or a jet mill. The mixture can also contain various additives, such as fluxing compounds and binders. Depending on compatibility and/or solubility, various liquids, e.g., heptane or an alcohol such as ethyl alcohol, can sometimes be used as a vehicle during milling. Suitable milling media should be used, e.g., material that would not be contaminating to the scintillator, since such contamination could reduce its light-emitting capability.

After being blended, the mixture can then be fired under temperature and time conditions sufficient to convert the mixture into a solid solution. These conditions will depend in part on the specific type of matrix material and activator being used. Usually, firing will be carried out in a furnace, at a temperature in the range of about 500°C to about 1000°C. The firing time will typically range from about 15 minutes to about 10 hours.

Firing should be carried out in an atmosphere free of oxygen and moisture, e.g., in a vacuum, or using an inert gas such as nitrogen, helium, neon, argon, krypton, and xenon. After firing is complete, the resulting material can be pulverized, to put the scintillator into powder form. Conventional techniques can then be used to process the powder into radiation detector elements.

Methods for making the single crystal materials are also well-known in the art. A non-limiting, exemplary reference is "Luminescent Materials", by G. Blasse et al, Springer-Verlag (1994). Usually, the appropriate reactants are melted at a temperature sufficient to form a congruent, molten composition. The melting temperature will depend on the identity of the reactants themselves, but is usually in the range of about 650°C to about 1100°C.

A variety of techniques can be employed to prepare a single crystal of the scintillator material from a molten composition. They are described in many references, such as U.S. Patent 6,437,336 (Pauwels et al); "Crystal Growth Processes", by J.C. Brice, Blackie & Son Ltd (1986); and the "Encyclopedia Americana", Volume 8, Grolier Incorporated (1981), pages 286-293. These descriptions are incorporated herein by reference. Non-limiting examples of the crystal-growing techniques are the Bridgman-Stockbarger method; the Czochralski method, the zone-melting method (or "floating zone" method), and the temperature gradient method. Those skilled in the art are familiar with the necessary details regarding each of these processes.

One non-limiting illustration can be provided for producing a scintillator in single crystal form, based in part on the teachings of the Lyons et al patent mentioned above. In this method, a seed crystal of the desired composition (described above) is introduced into a saturated solution. The solution is contained in a suitable crucible, and contains appropriate precursors for the scintillator material. The new crystalline material is allowed to grow and add to the single crystal, using one of the growing techniques mentioned above. The size of the crystal will depend in part on its desired end use, e.g., the type of radiation detector in which it will be incorporated.

Another embodiment of the invention is directed to a method for detecting high-energy radiation with a scintillation detector. The detector includes one or more crystals, formed from the scintillator composition described herein. Scintillation detectors are well-known in the art, and need not be described in detail here. Several references (of many) which discuss such devices are U.S. Patents 6,585,913 and 6,437,336, mentioned above, and U.S. 6,624,420 (Chai et al), which is also incorporated herein by reference. In general, the scintillator crystals in these devices receive radiation from a source being investigated, and produce photons which are characteristic of the radiation. The photons are detected with some type of photodetector ("photon detector"). (The photodetector is connected to the scintillator crystal by conventional electronic and mechanical attachment systems).

The photodetector can be a variety of devices, all well-known in the art. Non-limiting examples include photomultiplier tubes, photodiodes, CCD sensors, and image intensifiers. Choice of a particular photodetector will depend in part on the type of radiation detector being fabricated, and on its intended use.

The radiation detectors themselves, which include the scintillator and the photodetector, can be connected to a variety of tools and devices, as mentioned previously. Non-limiting examples include well-logging tools and nuclear medicine devices (e.g., PET). The radiation detectors may also be connected to digital imaging equipment, e.g., pixilated flat panel devices. Moreover, the scintillator may serve as a component of a screen scintillator. For example, powdered scintillator material could be formed into a relatively flat plate which is attached to a film, e.g., photographic film. High energy radiation, e.g., X-rays, originating from some source, would contact the scintillator and be converted into light photons which are developed on the film.

A brief discussion of several of the preferred end use applications is appropriate. Well-logging devices were mentioned previously, and represent an important application for these radiation detectors. The technology for operably connecting the radiation detector to a well-logging tube is well-known in the art. The general concepts are described in U.S. Patent 5,869,836 (Linden et al), which is incorporated herein by reference. The crystal package containing the scintillator usually includes an optical window at one end of the enclosure-casing. The window permits radiation-induced scintillation light to pass out of the crystal package for measurement by the light-sensing device (e.g., the photomultiplier tube), which is coupled to the package. The light-sensing device converts the light photons emitted from the crystal into electrical pulses that are shaped and digitized by the associated electronics. By this general process, gamma rays can be detected, which in turn provides an analysis of the rock strata surrounding the drilling bore holes.

Medical imaging equipment, such as the PET devices mentioned above, represent another important application for these radiation detectors. The technology for operably connecting the radiation detector (containing the scintillator) to a PET device is also well-known in the art. The general concepts are described in many references, such as U.S. Patent 6,624,422 (Williams et al), incorporated herein by reference. In brief, a radiopharmaceutical is usually injected into a patient, and becomes concentrated within an organ of interest. Radionuclides from the compound decay and emit positrons. When the positrons encounter electrons, they are annihilated and converted into photons, or gamma rays. The PET scanner can locate these "annihilations" in three dimensions, and thereby reconstruct the shape of the organ of interest for observation. The detector modules in the scanner usually include a number of "detector blocks", along with the associated circuitry. Each detector block may contain an array of the scintillator crystals, in a specified arrangement, along with photomultiplier tubes.

In both the well-logging and PET technologies, the light output of the scintillator is critical. The present invention can provide scintillator materials which possess the desired light output for demanding applications of the technologies. Moreover, it is possible that the crystals can simultaneously exhibit some of the other important properties noted above, e.g., short decay time, high "stopping power", and acceptable energy resolution. Furthermore, the scintillator materials can be manufactured economically. They can also be employed in a variety of other devices which require radiation detection.

While the embodiments of various aspects of this invention have been described, it is understood that additions, modifications, and substitutions may be made therein, without departing from the spirit and scope of the invention. All of the patents, articles and texts which are mentioned above are incorporated herein by reference.

## Claims

1. A scintillator composition, comprising the following, and any reaction products thereof:
(a) a matrix material, comprising:
(i) at least one lanthanide halide; and
(ii) at least one alkali metal;
and
(b) an activator for the matrix material, comprising cerium, praseodymium, or a mixture of cerium and praseodymium.

2. The scintillator composition of claim 1, wherein the lanthanide in the matrix material is selected from the group consisting of lanthanum, yttrium, gadolinium, lutetium, scandium, and mixtures thereof.

3. The scintillator composition of claim 1 or claim 2, wherein the alkali metal is selected from the group consisting of potassium, rubidium, cesium, sodium, and mixtures thereof.

4. The scintillator composition of any preceding claim, wherein the lanthanide halide of component (i) is selected from the group consisting of lanthanum bromide, lanthanum chloride, lanthanum iodide, lutetium chloride, lutetium bromide, yttrium chloride, yttrium bromide, gadolinium chloride, gadolinium bromide, praseodymium chloride, praseodymium bromide, and mixtures thereof.

5. The scintillator composition of any preceding claim, wherein the molar ratio of alkali metal (total) to lanthanide halide (total) is from about 2.2 : 1.0 to about 1.8 : 1.0.

6. The scintillator composition of any preceding claim, in substantially monocrystalline form.

7. The scintillator composition of any preceding claim, wherein the matrix material comprises at least one compound selected from the group consisting of K₂LaCl₅, Rb₂LaCl₅, Cs₂LaCl₅, K₂LaBr₅, Rb₂LaBr₅, K₂Lal₅, Rb₂Lal₅, K₂GdCl₅, K₂GdBr₅, and Cs₂LuCl₅.

8. A radiation detector for detecting high-energy radiation, comprising:
(A) a crystal scintillator which comprises the following composition, and any reaction products thereof:
(a) a matrix material, comprising:
(i) at least one lanthanide halide; and
(ii) at least one alkali metal; and
(b) an activator for the matrix material, comprising cerium, praseodymium, or a mixture of cerium and praseodymium.;
and
(B) a photodetector optically coupled to the scintillator, so as to be capable of producing an electrical signal in response to the emission of a light pulse produced by the scintillator.

9. The radiation detector of claim 8, wherein the photodetector is at least one device selected from the group consisting of a photomultiplier tube, a photodiode, a CCD sensor, and an image intensifier.

10. A method for detecting high-energy radiation with a scintillation detector, comprising the steps of:
(A) receiving radiation by a scintillator crystal, so as to produce photons which are characteristic of the radiation; and
(B) detecting the photons with a photon detector coupled to the scintillator crystal;
wherein the scintillator crystal is formed of a composition comprising the following, and any reaction products thereof:
(a) a matrix material, comprising:
(i) at least one lanthanide halide; and
(ii) at least one alkali metal;
and
(b) an activator for the matrix material, comprising cerium, praseodymium, or a mixture of cerium and praseodymium.
